# DEMANDE DE BREVET EUROPEEN

(11) **EP 0 654 258 A1**
(43) Date de publication de la demande: **24.05.1995**
(21) Numéro de dépôt: 94115094.8
(22) Date de dépôt: 24.09.1994
(51) Int. Cl.: A61J 9/02, G01K 5/64

(54) **Récipient muni d'un thermomètre**

(30) Priorité: 18.11.1993 CH 3445/93
(71) Demandeur: RUEGER S.A., CH-1023 Crissier (CH)
(72) Inventeur: Rueger, Bernard, CH-1052 Le Mont-sur-Lausanne (CH)
(74) Mandataire: KIRKER & Cie S.A.

(57) **Abrégé**

Dans un récipient muni d'un thermomètre analogique à lame bi- ou multi-métal, une extrémité (3) du spiral (4) est solidaire d'une base 2 maintenue en contact thermique intime avec la paroi extérieure (1) du récipient ou son contenu, l'autre extrémité porte un index. Un boîtier (2, 6) présente au moins une zone transparente et renferme ce spiral (4).

## Description

La présente invention a pour objet un récipient, plus particulièrement un biberon, muni d'un thermomètre indiquant la température du liquide contenu dans ce récipient.

On connaît du document US 5.000.581 un biberon qui dans une forme d'exécution est muni, dans un double fond, d'un thermomètre digital électronique. De tels dispositifs sont peu fiables car le contact entre le capteur et la paroi du biberon n'est pas toujours bon et peut se modifier sous l'effet de chocs. De plus on est obligé de changer la pile d'alimentation du thermomètre électronique et ce dernier comportant notamment des connexions souples, soudures, etc., peut être facilement endommagé sous l'effet de chocs.

On connaît encore des documents DE-A1-3917124 et EP-A1-0.469.220 des biberons équipés de thermomètres analogiques à lames bi-métalliques montées sur le fond du biberon et dont l'une des extrêmités du spiral de mesure est reliée à une sonde thermique s'étendant à l'intérieur du biberon. Ces sondes sont fragiles et de plus interdisent un lavage et une stérilisation correcte du biberon. Dans ce document allemand précité, le thermomètre comporte une partie électronique et une batterie qui ne supportent pas la température de stérilisation.

Le document EP-A1-0.469.220 décrit encore une exécution du biberon dans laquelle le thermomètre est incorporé dans un logement pratiqué dans la paroi latérale du biberon et obturé par une lunette transparente. Dans cette exécution, le fond du boîtier du dispositif de mesure est plus grand que le diamètre de l'ensemble pour sa fixation dans la matière formant la paroi du biberon. Cela implique que l'élément de mesure soit incorporé au biberon lors de sa fabrication, notamment de son injection ou moulage ce qui complique grandement ces opérations et rend tout étalonnage ultérieur du thermomètre difficile, voire impossible. La réalisation de telles formes n'est pas possible à l'aide de techniques simples à des prix compétitifs.

Le document US-A-4 930 902 décrit un biberon présentant un fond creux destiné à recevoir de façon amovible un dispositif électronique de mesure de la température. Une telle réalisation est fragile, peu fiable car on ne peut garantir le contact de la sonde avec le fond du biberon.

La présente invention a pour but la réalisation d'un récipient, notamment d'un biberon, muni d'un thermomètre analogique obviant aux inconvénients précités, qui résiste tant aux chocs mécaniques que thermiques, qui puisse se fixer sur la paroi du récipient après la fabrication de celui-ci et sans interférer avec les opérations de moulage, injection, étirage-soufflage, etc. Il va sans dire que le récipient selon l'invention présente une surface interne lisse, exempte de tout organe tel que sonde ou capteur pour permettre un bon nettoyage évitant tout dépôt résiduel de nourriture et une stérilisation efficace.

La présente invention a pour objet un récipient, notamment un biberon, muni d'un thermomètre mécanique qui se distingue par les caractéristiques de la revendication 1.

Le dessin annexé illustre schématiquement et à titre d'exemple quelques formes d'exécution du récipient selon l'invention.

La figure 1 illustre en vue de côté un biberon muni sur l'une de ses faces latérales d'un thermomètre.

La figure 2 est une coupe partielle suivant la ligne II-II de la figure 1.

La figure 3 est une coupe semblable à celle de la figure 2 d'une seconde forme d'exécution du récipient.

La figure 4 illustre en coupe la paroi latérale d'un récipient suivant une troisième forme d'exécution.

La figure 5 illustre une coupe semblable à la figure 4 d'une quatrième forme d'exécution du récipient.

La figure 6 illustre une variante de la forme d'exécution illustrée à la figure 4.

Les figures 7 et 8 illustrent de face et de profil, partiellement en coupe une cinquième forme d'exécution du biberon.

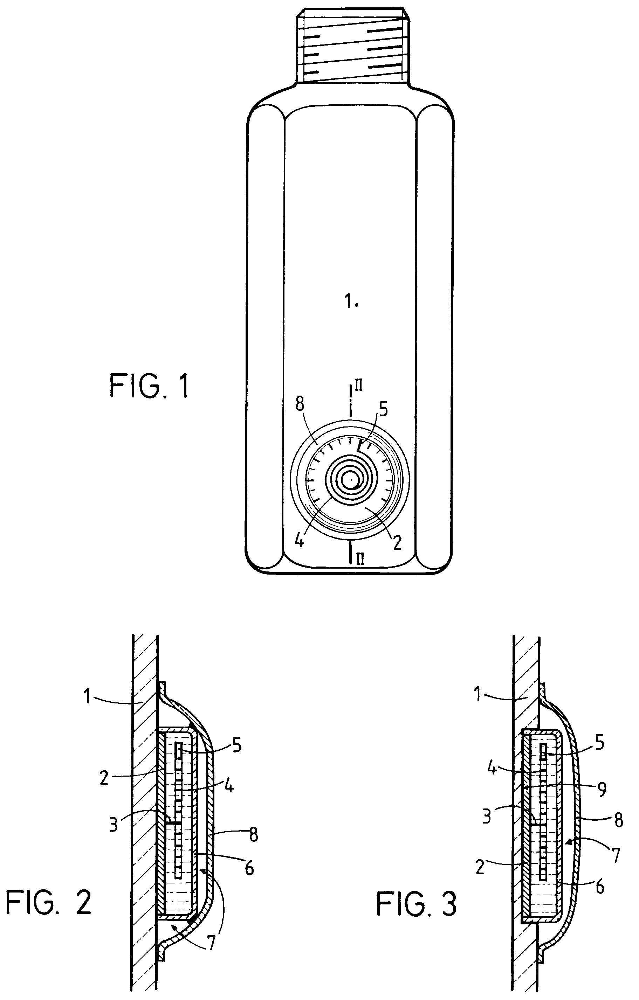

La première forme d'exécution du récipient illustré aux figures 1 et 2 constitue un biberon pour nouveaux-nés muni d'un thermomètre. Le biberon 1 est constitué d'un récipient ayant la forme générale d'une bouteille réalisée en matière synthétique ou en verre de façon traditionnelle. Dans la forme illustrée, le biberon comporte des faces latérales planes et une section polygonale mais sa section pourrait aussi bien être circulaire, ovale, etc.

Ce biberon 1 est muni sur sa paroi latérale d'un thermomètre mécanique à lame bi- ou multimétal présentant généralement mais non obligatoirement la forme d'une spirale ou d'une hélice. Ce thermomètre comporte une base 2 en un matériau bon conducteur de la chaleur appliquée contre la paroi extérieure du biberon et en contact thermique intime avec celle-ci. Cette base est maintenue dans cette position, par exemple soit par application mécanique simple, soit par collage à l'aide d'une colle ou pâte bonne conductrice de la chaleur. D'une façon générale on s'assure par un bon contact entre la base 2 et la paroi du biberon qu'une transmission de chaleur optimale puisse avoir lieu. Ceci peut être obtenu également en prévoyant une pâte, graisse ou autre matière entre ces éléments. L'extrémité centrale 3 du spiral 4 est fixée dans la base 2 et le spiral 4 est constitué par une lame bi- ou multimétallique dont la déformation en fonction de la température modifie la position de son extrémité externe 5 portant un index. Un couvercle 6 dont au moins une partie de la face frontale est transparente est fixé sur la base 2 ou autour de cette base 2 sur la face du biberon 1 et constitue avec cette base 2 un boîtier étanche renfermant le spiral 3,4,5.

Ce boîtier étanche 2,6 est entièrement rempli d'un liquide transparent ou translucide au moins, inerte, non toxique, non corrosif et constituant un amortisseur mécanique contre les chocs. Un tel liquide peut être de l'eau ou un autre liquide, de préférence ayant une viscosité supérieure à celle de l'eau, augmentant ainsi sa capacité d'amortisseur de chocs protégeant le spiral 3,4,5. Ce liquide a encore une fonction de dissipation et/ou de répartition thermique de la chaleur enregistrée dans le spiral lorsque le biberon est chauffé au micro-ondes par exemple. Il est en effet important de limiter, par sa dissipation immédiate dans le liquide, l'élévation de température qui prend naissance dans le métal du spiral afin d'éviter son endommagement ou son déréglage.

Il est également important que ce liquide ait un point d'ébullition, lorsque le biberon est conçu pour être stérilisé par la chaleur, plus élevé que la température de stérilisation (120 à 150^{o} C) du biberon, ceci afin d'éviter de soumettre le boîtier 2, 6 à de trop fortes pressions internes.

Les qualités essentielles et indispensables de ce liquide sont sa transparence, pour que l'on puisse lire l'indication de la température à l'aide de l'index 5 et d'une graduation apposée sur la base 2 ou sur la face du couvercle 6, et que sa viscosité soit suffisante pour préserver le spiral des chocs, par exemple lors de la chute du biberon. De plus, ce liquide doit présenter une bonne conductibilité thermique assurant lors d'un chauffage du biberon par micro-ondes une distribution de la chaleur et posséder un point d'ébullition supérieur à la température de stérilisation du biberon.

En effet, il est fréquent qu'un biberon tombe ou soit cogné vigoureusement contre un objet dur car l'enfant ou le bébé ne peut pas encore contrôler tous ses gestes. Comme de plus les spirals bi-métal ou multi-métal utilisées comme éléments de mesure de la température sont particulièrement sensibles aux chocs, il est extrêmement important, essentiel même, pour la fiabilité de la mesure que ce spiral soit protégé des chocs par un élément amortisseur, en particulier par le liquide contenu dans le premier boîtier 2,6.

Pour un bon fonctionnement du biberon à thermomètre, il faut bien entendu que le spiral indique la température du contenu du biberon, respectivement de sa paroi extérieure et non pas la température de l'air ambiant autour du biberon ou soit influencé par cette température ambiante.

Pour soustraire au maximum le spiral 4 à l'influence de l'air ambiant autour du biberon, il faut isoler le boîtier 2,6 de cet air ambiant en créant une chambre étanche autour de ce boîtier 2,6 à l'intérieur de laquelle se trouve un fluide transparent et isolant thermiquement, généralement de l'air. Dans l'exemple illustré cette chambre remplie d'air 7 est obtenue par une coque 8 ou membrane fixée à la paroi extérieure du biberon de façon étanche, par exemple par collage. Cette coque 8 définit ainsi avec la paroi du biberon 1 une chambre 7 renfermant le boîtier 2,6 et isolant celui-ci de l'atmosphère ambiante par la-chambre 7 remplie d'un fluide, gaz ou liquide, isolant thermiquement.

Dans l'exemple illustré cette coque 8 est en contact en deux points diamétralement opposés avec les bords du couvercle 6. Ceci permet d'appliquer la base 2 contre le biberon à l'aide de la coque 8 et donc évite de devoir coller ou fixer cette base 2 contre la paroi du biberon 1. Il est évident que les points de contact entre la coque 8 et le couvercle 6 sont limités pour éviter tout transfert de chaleur. La coque 8 est généralement en matière plastique et doit être transparente pour permettre la lecture de la température indiquée par le spiral 4 et la graduation correspondante. Dans une variante, le couvercle 6 peut être appliqué contre la paroi du biberon à l'aide de pattes de fixation élastiques. Dans ce cas, ces pattes ou éléments élastiques servent également d'amortisseurs protégeant le thermomètre en cas de chocs subits par le biberon.

On voit ainsi que dans le récipient muni selon l'invention d'un thermomètre, l'intérieur du récipient n'est pas modifié, la fabrication du récipient est indépendante de la pose du thermomètre et que ce thermomètre a un spiral protégé des chocs mécaniques par un liquide amortisseur contenu dans un boîtier et que de plus ce thermomètre est isolé thermiquement de l'atmosphère ambiante entourant le récipient, de sorte que la mesure reflète bien la température du contenu du récipient.

Dans une variante, la forme de la coque 8 peut être différente et ne pas entrer en contact avec le couvercle 6 du boîtier.

Dans la seconde forme d'exécution du récipient illustré à la figure 3, la paroi extérieure du récipient 1 comporte une creusure 9, venue de fabrication, dans laquelle viennent se loger la base 2 et le couvercle 6 formant le boîtier renfermant le spiral 3,4,5 et le liquide amortisseur mécanique. Une calotte 8 est fixée à la paroi du récipient 1 autour du boîtier 2,6. Dans cette exécution, cette calotte n'entre pas en contact avec le boîtier 2,6.

Cette seconde forme d'exécution présente tous les avantages déjà décrits et en plus permet de réduire la saillie ou surépaisseur formée par l'incorporation du thermomètre au biberon.

Dans cette forme d'exécution également, le boîtier étanche 2, 6 est rempli d'un liquide amortisseur et le second boîtier est rempli d'air formant une isolation thermique.

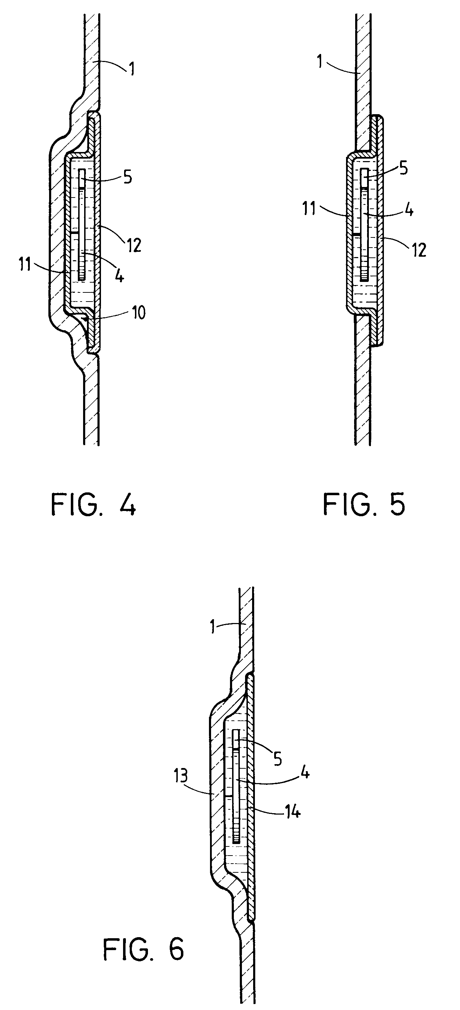

Dans la troisième forme d'exécution du biberon illustrée à la figure 4, la paroi 1 du récipient comporte une déformation vers l'intérieur de celui-ci formant une creusure 10 s'ouvrant vers l'extérieur et présentant de préférence une partie médiane plane. Dans cette exécution le boîtier renfermant le spiral 4 comporte un fond 11 creux et un couvercle plan 12 soudés à leur périphérie. Le rebord extérieur de ce boîtier 11, 12 est soudé contre la paroi du récipient le long de sa périphérie de manière à fixer le thermomètre sur la paroi du biberon. Là également ce boîtier 11, 12 est rempli d'un liquide ayant les qualités décrites précédemment. Une pâte ou autre matière peut être placée entre la paroi 1 du récipient et le boîtier 11, 12 pour assurer un bon contact thermique.

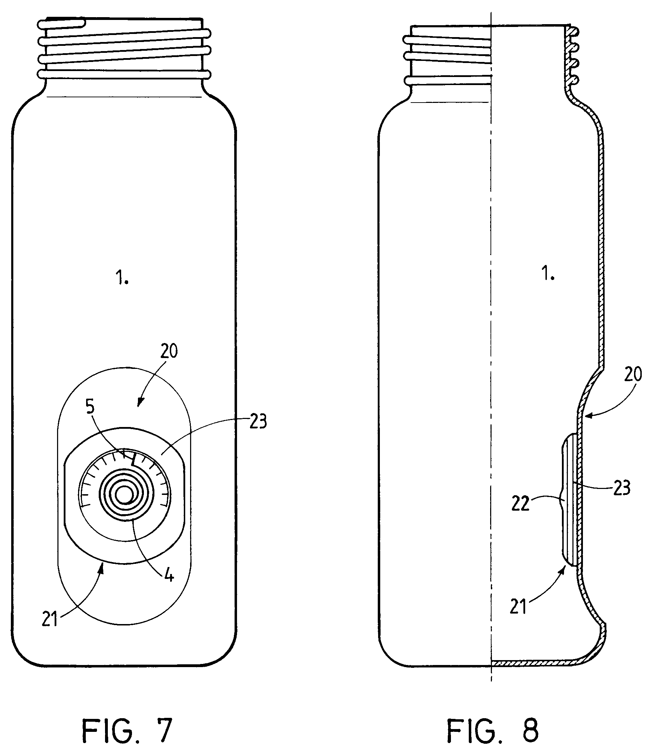

Dans une variante illustrée à la figure 6, le boîtier renfermant le spiral 4 est formé par une partie 13 de la paroi du biberon 1 formant une creusure et un couvercle 14 fixé ou soudé de façon étanche directement sur la paroi externe du biberon. Dans cette exécution l'une des extrémités du spiral est en contact ou fixée à la paroi du biberon directement.

Dans la quatrième forme d'exécution illustrée à la figure 5, le boîtier 11, 12 renfermant le spiral 4 traverse la paroi 1 du récipient par un trou qui y est pratiqué et est soudé par son rebord sur la paroi 1 de façon étanche.

Dans une telle exécution le contact thermique entre le fond 11 du boîtier 11, 12 renfermant le spiral, et rempli de liquide pour les raisons indiquées précédemment, est en contact direct avec le contenu du récipient assurant un excellent contact thermique.

Dans ces deux dernières formes d'exécution, la base du thermomètre est constituée par le fond du boîtier. Dans des variantes, la graduation de lecture de la température peut être portée par la coque 8 ou sur le couvercle 12 du boîtier 11, 12. Cette coque 8 de même que le couvercle 6 du boîtier peuvent présenter des zones opaques mais présentent toujours au moins une zone transparente permettant la lecture de la température.

Le liquide contenu dans le boîtier 2,6 ou 11, 12 est de préférence un liquide n'absorbant pas les ondes électro-magnétiques pour que le biberon puisse être chauffé dans un four à micro-ondes. Dans ce cas, ledit liquide agit également comme agent évacuateur de l'énergie capturée par le spiral et tend ainsi à réduire l'augmentation de température pendant le chauffage du récipient.

Il est évident que ce dispositif de mesure de la température peut être appliqué à n'importe quelle sorte de récipients bien qu'il ait été décrit à titre d'exemple en relation avec un biberon.

Il va de soi que l'index 5 du spiral 4 coopère avec une graduation portée par la face externe 6, 12 ou 14 du boîtier ou la coque 8 afin d'indiquer la valeur de la température du contenu du biberon.

Les figures 7 et 8 illustrent encore une cinquième forme d'exécution du biberon selon l'invention. Dans cette exécution la paroi extérieure 1 du biberon est en matériau transparent et présente une surface plane 20.

Cette portion plane 20 de la paroi du biberon sert de support au boîtier 21 renfermant le thermomètre. Ce boîtier 21 est fixé à cette paroi 1 à l'intérieur du biberon de sorte que le contact thermique entre le thermomètre et le liquide contenu dans le biberon est excellent. Le spiral 4 est fixé par son extrémité centrale sur le fond 22 de ce boitier tandis que son extrémité extérieure, comportant l'index 5, coopère avec une graduation portée par la paroi 23 du boîtier 21, transparente et fixée sur la face interne de la paroi du biberon.

Dans des variantes de ces cinq formes d'exécution il est possible, par le choix des matériaux constituant le spiral 4 et son boîtier, d'obtenir un amortissement suffisant aux chocs sans que le boîtier ne soit rempli d'un liquide. Ceci présente un avantage sur le plan de la sécurité notamment dans le cas où le boîtier est fixé sur la face interne de la paroi du récipient.

## Revendications

1. Récipient muni d'un thermomètre analogique à lame bi-ou multi-métal, caractérisé par le fait qu'une extrémité du spiral est en contact thermique intime avec le contenu du récipient tandis que son autre extrémité porte un index coopérant avec une graduation tous deux visibles de l'extérieur du récipient; et par le fait qu'un boîtier présentant au moins une zone transparente renferme ce spiral.

2. Récipient selon la revendication 1, caractérisé par le fait que le boîtier est rempli d'un liquide transparent ou translucide, conducteur de la chaleur et constituant un amortisseur de chocs protégeant le spiral; et le liquide contenu dans le boîtier présente une bonne conduction thermique et un point d'ébullition supérieur à la température maximum d'utilisation ou de stérilisation.

3. Récipient selon la revendication 2, caractérisé par le fait que le liquide contenu dans le boîtier est un liquide non toxique.

4. Récipient selon l'une des revendications précédentes, caractérisé par le fait que le boîtier est fixé sur la face externe de la paroi du récipient et qu'une chambre étanche entoure le boîtier, cette chambre étant remplie d'un fluide isolant thermique et présentant au moins une zone transparente.

5. Récipient selon la revendication 1, caractérisé par le fait que le boîtier est fixé sur la face interne de la paroi du récipient.

6. Récipient selon la revendication 4, caractérisé par le fait que la chambre est formée d'une coque fixée de façon étanche sur la paroi externe du récipient.

7. Récipient selon la revendication 6, caractérisé par le fait que la coque applique le boîtier contre la paroi externe du récipient en prenant contact avec ce boîtier en quelques points discrets pouvant également servir d'amortisseurs.

8. Récipient selon l'une des revendications précédentes, caractérisé par le fait que le boîtier est formé par un couvercle fixé de façon étanche à une base portant le spiral.

9. Récipient selon l'une des revendications précédentes, caractérisé par le fait que la base portant le spiral est solidaire de, ou maintenue en contact avec, la paroi externe du récipient.

10. Récipient selon l'une des revendications précédentes, caractérisé par le fait que l'une des extrémités du spiral est fixée directement sur la paroi du biberon et par le fait que le boîtier comporte une partie de la paroi du biberon et un couvercle fixé de façon étanche sur celle-ci.

11. Récipient selon l'une des revendications 1 à 8, caractérisé par le fait que le boîtier est placé au moins partiellement dans un logement de la paroi du récipient débouchant sur sa face extérieure, ce boîtier étant fixé de façon étanche, sur toute sa périphérie, à la paroi externe du récipient.

12. Récipient selon la revendication 1, caractérisé par le fait que la paroi du récipient présente un orifice donnant passage au fond du boîtier contenant le spiral, ce boîtier étant fixé de façon étanche sur toute sa périphérie à la paroi externe du récipient.
